# EUROPÄISCHE PATENTSCHRIFT

(11) **EP 1 560 424 B1**
(45) Veröffentlichungstag und Bekanntmachung des Hinweises auf die Patenterteilung: **08.04.2015**
(21) Anmeldenummer: 04030976.7
(22) Anmeldetag: 29.12.2004
(51) Int. Cl.: H04N 5/232, H04N 5/222, H04N 5/225

(54) **Elektronische Laufbildkamera**
Electronic motion picture camera
Caméra cinématographique électronique

(30) Priorität: 30.01.2004 DE 102004004806
(43) Veröffentlichungstag der Anmeldung: 03.08.2005
(73) Patentinhaber: ARNOLD & RICHTER CINE TECHNIK GMBH & CO. BETRIEBS KG, 80799 München (DE)
(72) Erfinder: Koppetz, Michael, 81669 München (DE)
(74) Vertreter: Manitz, Finsterwald & Partner GbR

(56) Entgegenhaltungen:
- EP-A- 0 152 496
- EP-A- 1 071 277
- EP-A- 1 343 312
- EP-A- 1 363 447
- WO-A-96/31050
- WO-A-99/17543
- JP-A- 2003 319 246
- US-A- 4 330 797
- US-A- 5 496 106

## Beschreibung

Die Erfindung betrifft eine elektronische Laufbildkamera mit einer Empfangsoptik und einem Strahlenteiler, der den Empfangsstrahlengang in einen zu einem optoelektronischen Aufnahmesensor führenden Aufnahmestrahlengang und einen zu einem optischen Sucher führenden Sucherstrahlengang aufteilt.

Bei elektronischen Laufbildkameras wird das aufgenommene Nutzsignal üblicherweise als Monitorbild in einem elektronischen Sucher oder auf einem an der Kamera angebrachten Bildschirm angezeigt. Das somit wiedergegebene Aufnahmebild dient beispielsweise der Kontrolle der Schärfe. Ein elektronischer Sucher hat den Nachteil, dass das Umfeld des Aufnahmebilds nicht beobachtet werden kann. Somit können potentiell störende Objekte außerhalb des aufgenommenen Bildausschnitts nicht erkannt werden, ehe sie in das Aufnahmebild eintreten. Vor allem sind Sucher, die auf elektronischen Anzeigen basieren, hinsichtlich der Wiedergabequalität begrenzt.

Es sind auch elektronische Laufbildkameras bekannt, die mit einem optischen Sucher versehen sind. Bei diesen Kameras wird ein Teil des von der Empfangsoptik erfassten Lichtstroms in ein zum Aufnahmesensor parallel geschaltetes optisches System geleitet, das für den Kameramann das gleiche Aufnahmebild anzeigt, das auch vom Aufnahmesensor aufgezeichnet wird. Hierdurch kann eine hohe Bildqualität des Suchers erreicht werden. Nachteilig ist jedoch, dass dem Kameramann keine zusätzliche Bildinformation zur Verfügung gestellt werden kann.

Aus der US-A-4330797 sind eine Fernsehkamera und ein Verfahren gemäß dem jeweiligen Oberbegriff der Ansprüche 1 und 2 bzw. der Ansprüche 18 und 19 bekannt.

Aus der EP-A-1343312 ist eine elektronische Laufbildkamera bekannt, bei der eine rotierende Spiegelblende den Empfangsstrahlengang in einen Aufnahmestrahlengang und einen Sucherstrahlengang aufteilt, wobei im Sucherstrahlengang eine mattierte Glasscheibe und eine Sucheroptik angeordnet sind.

Die EP-A-0152496 beschreibt einen elektronischen Fotoapparat mit einem Strahlenteiler im Empfangsstrahlengang und einem halbdurchlässigen Spiegel im Sucherstrahlengang. Mittels einer elektronischen Anzeige kann eine Kombination eines binären und des analogen Videosignals angezeigt werden, die mittels des halbdurchlässigen Spiegels im Sucher beobachtbar ist. Das binäre Videosignal gibt Bereiche der Überbelichtung oder Unterbelichtung an.

Es ist somit eine Aufgabe der Erfindung, eine elektronische Laufbildkamera zu schaffen, deren Sucher eine hohe Bildqualität besitzt und für unterschiedliche Anförderungen hinsichtlich der Wiedergabe des Aufnahmebilds und weiterer Bildinformation flexibel einsetzbar ist. Ferner soll ein entsprechendes Verfahren geschaffen werden.

Diese Aufgabe wird durch eine Laufbildkamera mit den Merkmalen des Anspruchs 1 oder des Anspruchs 2 gelöst.

Ferner wird diese Aufgabe durch ein Verfahren mit dem Merkmalen des Anspruchs 18 oder des Anspruchs 19 gelöst.

Die Empfangsoptik bildet das Aufnahmebild also entlang des Aufnahmestrahlengangs auf den Aufnahmesensor ab und bringt das Aufnahmebild zudem im Sucher zur Darstellung, wobei die erfindungsgemäße Kamera ein Hybrid-Suchersystem mit zwei überlagerten Strahlengängen besitzt: In den Sucherstrahlengang eines optischen Suchers ist ein optischer Bildmischer integriert, der die Darstellung des von der Empfangsoptik erfassten Aufnahmebilds und eines von einer elektronischen Anzeige erzeugten Zusatzbilds gestattet, wobei das Aufnahmebild und das Zusatzbild dem Betrachter im Sucher als ein einziges, einheitliches Laufbild dargestellt werden können. Dadurch wird die hohe Bildqualität eines optischen Suchers mit der Möglichkeit kombiniert, mittels einer elektronischen Anzeige eine zusätzliche Bildinformation in den Sucherstrahlengang einzuspiegeln oder auf sonstige Weise optisch einzuleiten.

Das Zusatzbild kann den Kameramann während der Aufnahme somit in vielfältiger Weise unterstützen, wobei die darin enthaltene Bildinformation in Abhängigkeit von der speziellen Aufnahmesituation flexibel ausgewählt werden kann. Das eigentliche Aufnahmebild und das Zusatzbild können dabei wahlweise gleichzeitig, alternativ zueinander, zeitlich alternierend oder alternierend mit einem zeitlichen Überlapp in dem optischen Sucher dargestellt werden.

Insbesondere ist die elektronische Anzeige zur Wiedergabe von Laufbildern ausgebildet, die das im Sucher zur Darstellung gebrachte eigentliche Aufnahmebild ergänzen.

Da der Sucher als ein optischer Sucher ausgebildet ist, ist eine hohe Bildqualität gewährleistet, ohne die bekannten technischen Limitationen eines elektronischen Monitorbilds. Überdies kann der optische Sucher dergestalt konfiguriert sein, dass der von der Empfangsoptik in Richtung des Suchers abgebildete und dort beobachtbare Bildausschnitt größer ist als der vom Aufnahmesensor tatsächlich aufgenommene Bildausschnitt des Aufnahmebilds, so dass der Kameramann auch das Umfeld des tatsächlich aufgenommenen Bildausschnitts beobachten kann.

Gespeicherte Laufbildsequenzen werden während einer neuen Aufnahme dem tatsächlichen Aufnahmebild überlagert nämlich als Referenz für die Kameraführung.

Ein besonderer Vorteil ergibt sich bei Verwendung einer rotierenden Spiegelblende als Strahlenteiler im Empfangsstrahlengang: In diesem Fall führt die Rotation der Spiegelblende zwangsläufig zu einem intermittierenden Ausblenden des Lichteinfalls auf den Aufnahmesensor. Bei der erfindungsgemäßen Kamera können diese Ausblend-Zeitintervalle gegenüber jenen Zeitintervallen, in denen das einfallende Licht in Richtung des Suchers umgelenkt wird, verringert werden. Das hierdurch verursachte Flackern im Sucher kann nämlich dadurch ausgeglichen werden, dass über die elektronische Anzeige und den optischen Bildmischer das vom Sensor aufgezeichnete Aufnahmebild in den Sucherstrahlengang eingeleitet wird.

Vorzugsweise ist die erläuterte Kamera als eine digitalelektronische Laufbildkamera mit einer dem Aufnahmesensor nachgeschalteten Digitalisierungseinrichtung ausgebildet.

Weitere Ausführungsformen der Erfindung sind in den Unteransprüchen genannt. Die Erfindung wird nachfolgend lediglich beispielhaft unter Bezugnahme auf die Zeichnungen erläutert, wobei gleichartige Elemente mit denselben Bezugszeichen gekennzeichnet sind.

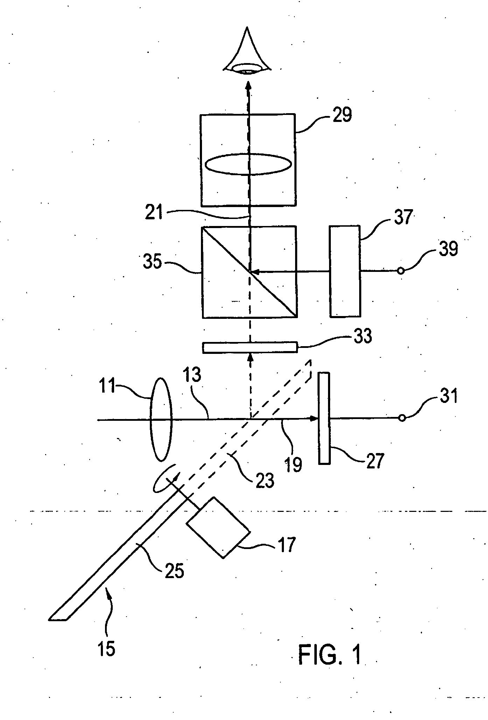

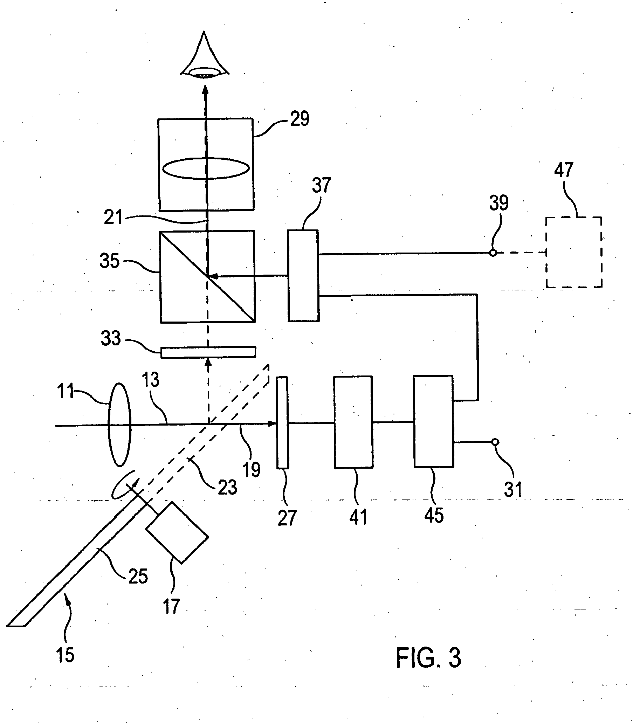

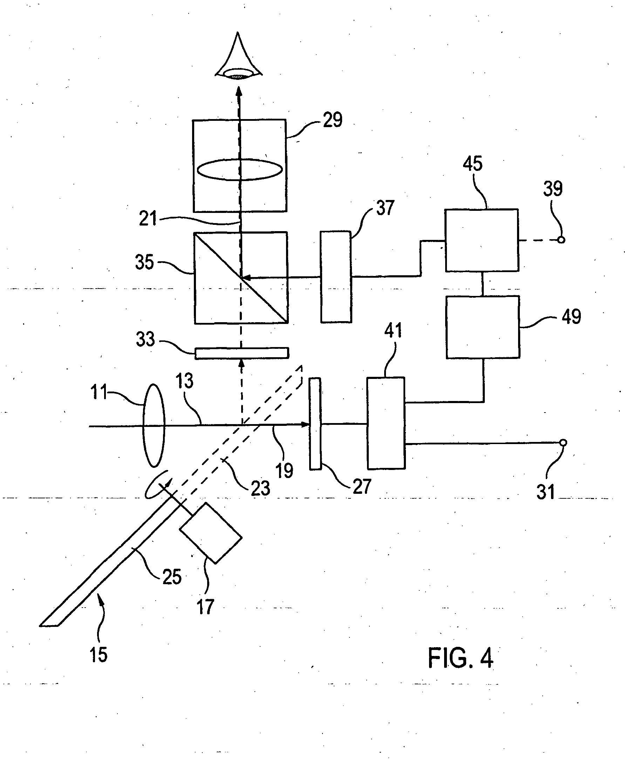

- Fig. 1 bis 8: zeigen verschiedene Ausführungsformen einer elektronischen Laufbildkamera, wobei lediglich die Fig. 3 und 4 erfindungsgemäße Ausführungsformen zeigen.

Fig. 1 zeigt eine erste Ausführungsform einer elektronischen Laufbildkamera. Diese besitzt eine Empfangsoptik 11, die das aufzuzeichnende Laufbild entlang eines Empfangsstrahlengangs 13 abbildet. Mittels einer als Strahlenteiler dienenden Spiegelblende 15, die durch eine Antriebseinheit 17 zu einer Rotationsbewegung angetrieben werden kann, wird das entlang des Empfangsstrahlengangs 13 einfallende Licht abwechselnd in Richtung eines Aufnahmestrahlengangs 19 durchgelassen oder in Richtung eines Sucherstrahlengangs 21 umgelenkt. Zu diesem Zweck besitzt die Spiegelblende 15 einen Durchlassbereich 23 und einen verspiegelten Ausblendbereich 25.

Ein von der Empfangsoptik 11 erfasstes Aufnahmebild wird somit abwechselnd entlang des Aufnahmestrahlengangs 19 auf einen optoelektronischen Aufnahmesensor 27 abgebildet und entlang des Sucherstrahlengangs 21 umgelenkt, um in einem optischen Sucher 29 zur Darstellung gebracht zu werden. Der Aufnahmesensor 27 ist beispielsweise durch einen CCD- oder CMOS-Bildwandler gebildet, und er besitzt einen Signalausgang 31 zur Ausgabe eines Empfangssignals.

Im Sucherstrahlengang 21 ist eine Mattscheibe 33 angeordnet, auf die das von der Empfangsoptik 11 erfasste Aufnahmebild abgebildet wird, sofern sich der Ausblendbereich 25 der Spiegelblende 15 im Empfangsstrahlengang 13 befindet. Dadurch entsteht an der Mattscheibe 33 ein reales Bild, das der Kameramann mittels des Suchers 29 betrachten kann.

Im Sucherstrahlengang 21 ist ferner ein optischer Bildmischer 35 angeordnet, der einerseits die Betrachtung der Mattscheibe 33 durch den Sucher 29 gestattet und andererseits ein von einer elektronischen Anzeige 37 wiedergegebenes Zusatzbild im Sucher 29 zur Darstellung bringt. Mittels des optischen Bildmischers 35 wird dem Mattscheibenbild also das Zusatzbild der elektronischen Anzeige 37 überlagert, wobei einem Betrachter bei entsprechender Anpassung der beiden optischen Zweige die beiden überlagerten Bilder im Sucher 29 als ein einziges Bild erscheinen. Zu diesem Zweck sind die Anzeige 37 und die Mattscheibe 33 in derselben Objektebene bzw. Fokuslage des Suchers 29 angeordnet.

Der optische Bildmischer 35 ist beispielsweise durch einen teildurchlässigen Spiegel gebildet. Die elektronische Anzeige 37 ist beispielsweise durch einen Flüssigkristallmonitor, einen TFT-Monitor (thin film transistor) oder einen Röhrenmonitor (CRT, cathode ray tube) gebildet. Sie besitzt einen Signaleingang 39, über den das Zusatzbild bzw. entsprechende Bildsignale zugeführt werden können.

Die Verwendung eines optischen Suchers 29 in Verbindung mit einer Mattscheibe 33 gewährleistet eine hohe Qualität des Sucherbildes. Trotz des Einsatzes eines optischen Suchersystems kann dem Kameramann im Sucher 29 mittels der Anzeige 37 und des Bildmischers 35 auch ein Zusatzbild angezeigt werden, um hierdurch die Aufnahme in vielfältiger und flexibler Weise zu unterstützen.

Insbesondere ist es möglich, dass an der elektronischen Anzeige 37 Laufbilder oder Stillbilder wiedergegeben werden, die das auf die Mattscheibe 33 intermittierend abgebildete Aufnahmebild zeitlich ergänzen, so dass ein durch die Rotation der Spiegelblende 15 möglicherweise hervorgerufenes Flackern des abgebildeten Aufnahmebilds vermieden wird. Die elektronische Anzeige 37 und der optische Bildmischer 35 können auch dazu verwendet werden, eine soeben aufgenommene Laufbildsequenz im Sucher 29 zu Kontrollzwecken anzuzeigen. Alternativ oder zusätzlich können mittels der Anzeige 37 und des Bildmischers 35 beliebige andere Bildinformationen in den Sucherstrahlengang 21 eingespiegelt werden.

Ein weiterer Vorteil dieser Kamera besteht darin, dass bei den Vorbereitungen einer Aufnahme, während die Spiegelblende 15 noch steht und der Durchlassbereich 23 sich im Empfangsstrahlengang 13 befindet, ein Bild im Sucher 29 zu sehen ist: Der Aufnahmesensor 27 kann während der Aufnahmevorbereitungen ein Empfangssignal liefern, das beispielsweise zu Prüf- und Referenzzwecken eingesetzt wird. Gleichzeitig ist trotz stehender Spiegelblende 15 eine Bildbeobachtung im Sucher 29 möglich, indem das Empfangssignal des Aufnahmesensors 27 über den Signaleingang 39 der elektronischen Anzeige 37 zugeführt wird und von dieser über den optischen Bildmischer 35 im Sucher 29 zur Anzeige gebracht wird.

Vorzugsweise besitzt die Kamera eine Justiereinrichtung, durch die die Wiedergabe des Zusatzbilds der elektronischen Anzeige 37 relativ zu dem auf die Mattscheibe 33 abgebildeten Aufnahmebild justiert werden kann. Durch eine derartige Justierung können beispielsweise die Größe, die Position, die Ausrichtung oder sonstige geometrische Eigenschaften des Zusatzbilds angepasst werden, um im Sucher 29 eine geometrieidentische Überlagerung mit dem Aufnahmebild zu erreichen. Bevorzugt erfolgt diese Justierung auf elektronische Weise.

Selbstverständlich ist es abweichend von der Darstellung gemäß Fig. 1 auch möglich, dass die Mattscheibe 33, der optische Bildmischer 35 und der Sucher 29 L-förmig angeordnet sind, so dass der Bildmischer 35 das auf die Mattscheibe 33 abgebildete Aufnahmebild in Richtung des Sensors 29 umlenkt, während das Zusatzbild der elektronischen Anzeige 37 beispielsweise geradlinig durch den Bildmischer 35 in Richtung des Suchers 29 wiedergegeben wird.

Die Verwendung der Mattscheibe 33 ist nicht zwingend erforderlich. Stattdessen kann die Empfangsoptik 11 im Sucherstrahlengang 21 ein virtuelles Bild erzeugen, das im Sucher 29 gemeinsam mit dem Zusatzbild der Anzeige 37 betrachtet werden kann.

Anstelle der Spiegelblende 15 kann prinzipiell auch ein Strahlenteiler vorgesehen sein, der den einfallenden Lichtstrom kontinuierlich teilt.

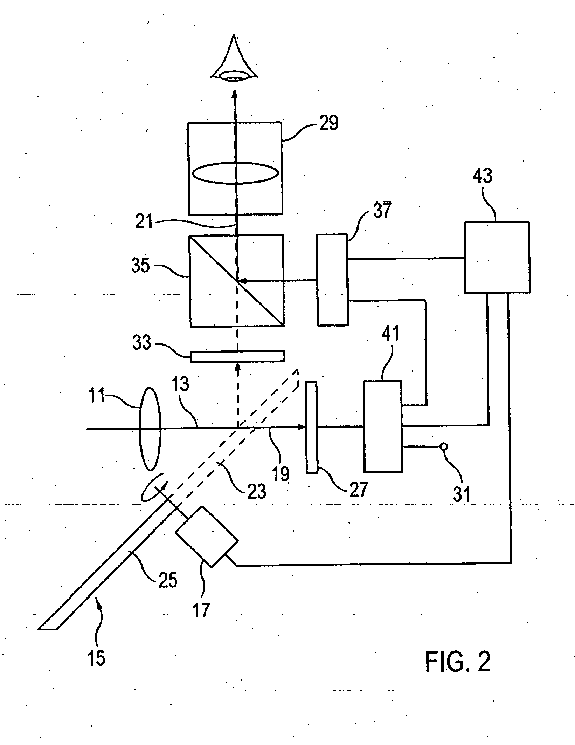

Fig. 2 zeigt eine Weiterbildung der Ausführungsform gemäß Fig. 1. Bei dieser ist eine dem Aufnahmesensor 27 nachgeschaltete Signalverarbeitungseinrichtung 41 vorgesehen. Diese bereitet das Empfangssignal des Aufnahmesensors 27 auf, beispielsweise durch Verstärkung und vorzugsweise durch zusätzliche Digitalisierung. Das aufbereitete Signal wird zum einen am Signalausgang 31 als Nutzsignal ausgegeben und zum anderen an die elektronische Anzeige 37 übermittelt.

Die elektronische Anzeige 37 kann somit das aktuelle Empfangssignal des Aufnahmesensors 27 in Echtzeit als Zusatzbild wiedergeben. Dadurch wird in dem optischen Bildmischer 35 das vom Aufnahmesensor 27 aufgezeichnete Aufnahmebild jenem Aufnahmebild überlagert oder zeitlich ergänzt, das von der Empfangsoptik 11 über die rotierende Spiegelblende 15 auf die Mattscheibe 33 abgebildet wird. Somit erscheint das im Sucher 29 beobachtbare Aufnahmebild besonders ruhig, ohne störendes Flackern.

Optional ist eine Steuereinrichtung 43 vorgesehen, die die Antriebseinheit 17 der Spiegelblende 15, den Aufnahmesensor 27 und die elektronische Anzeige 37 derart synchronisiert, dass im Sucher 29 im Wesentlichen alternierend, d.h. genau abwechselnd oder mit einem zeitlichen Überlapp, das von der Empfangsoptik 11 über die Spiegelblende 15 auf die Mattscheibe 33 abgebildete Aufnahmebild und das von der elektronischen Anzeige 37 wiedergegebene Empfangssignal des Aufnahmesensors 27 beobachtet werden können.

Die in Fig. 2 gezeigte Steuereinrichtung 43 kann die Antriebseinheit 17 der Spiegelblende 15 auch derart ansteueren, dass während einer aufzuzeichnenden Bildsequenz die Empfangsoptik 11 das Aufnahmebild ausschließlich auf den Aufnahmesensor 27 abbildet. Mit anderen Worten wird die Spiegelblende 15 zeitweise zum Stillstand gebracht, so dass der Durchlassbereich 23 sich im Empfangsstrahlengang 13 befindet. Da das Aufnahmebild somit nicht mehr auf die Mattscheibe 33 abgebildet wird, veranlasst die Steuereinrichtung 43, dass die Anzeige 37 während der gesamten Bildsequenz das aktuelle Empfangssignal des Aufnahmesensors 27 als Zusatzbild wiedergibt. Der Sucher 29 dient somit als rein elektronischer Sucher. Dies ist bei schlechten Lichtverhältnissen von besonderem Vorteil, da das gesamte Empfangslicht vollständig auf den Aufnahmesensor 27 gelenkt werden kann.

Fig. 3 zeigt eine Weiterbildung, bei der dem Aufnahmesensor 27 und einer Signalverarbeitungseinrichtung 41 eine Bildspeichereinrichtung 45 nachgeschaltet ist. Diese liefert an einem Signalausgang 31 das aufbereitete Empfangssignal des Aufnahmesensors 27. Ein weiterer Signalausgang ist mit einem Eingang der elektronischen Anzeige 37 verbunden. Somit können Laufbilddaten oder Stillbilddaten, die zu einem früheren Zeitpunkt vom Aufnahmesensor 27 aufgezeichnet und in der Bildspeichereinrichtung 45 gespeichert worden sind, an der elektronischen Anzeige 37 wiedergegeben und somit im optischen Sucher 29 beobachtet werden. Die Bildspeichereinrichtung 45 ermöglicht dadurch das Betrachten einer zuvor aufgenommenen Laufbildsequenz im Sucher 29, ohne dass hierfür ein zusätzlicher Bildmonitor erforderlich ist.

Ein besonderer Vorteil der Ausführungsform gemäß Fig. 3 besteht darin, dass während einer neuen Aufnahme dem auf die Mattscheibe 33 abgebildeten Aufnahmebild eine zuvor mittels des Aufnahmesensors 27 aufgezeichnete Laufbildsequenz überlagert werden kann, beispielsweise um dem Kameramann eine Referenz für die Kameraführung zu bieten.

Alternativ oder zusätzlich kann die elektronische Anzeige 37 oder ein hiermit verbundener Datenpuffer einen Signaleingang 39 aufweisen, an den eine externe Speichereinrichtung 47 angeschlossen werden kann, um der elektronischen Anzeige 37 Laufbilddaten oder Stillbilddaten zuzuführen, die mittels des optischen Bildmischers 35 im Sucher 29 als Zusatzbild wiedergegeben werden sollen. Durch das Anschließen einer externen Speichereinrichtung 47 ist es insbesondere möglich, an der elektronischen Anzeige 37 rechnerisch erzeugte oder bearbeitete Bildelemente wiederzugeben, die in der Nachbearbeitung der Aufnahme eingefügt werden sollen. Indem diese Bildelemente bereits während der Aufnahme für den Kameramann sichtbar gemacht werden, kann dieser das Zusammenwirken der realen Szene mit den virtuellen Bildelementen berücksichtigen. Die Kameraführung wird hierdurch erheblich erleichtert, und es wird vermieden, dass eine aufgezeichnete Laufbildsequenz sich nachträglich als ungeeignet für die gewünschte Nachbearbeitung erweist.

Besonders vorteilhaft ist das erläuterte Einblenden einer zusätzlichen Laufbildsequenz in den optischen Sucher 29 also für das so genannte Compositing, also für das Aufzeichnen von Motiven vor einem blauen Hintergrund (Blue Screen) für das nachträgliche Überlagern von mehreren verschiedenen Motiven in der Nachbearbeitung. Falls beispielsweise die Aufnahme eines realen Schauspielers vor einem Blue Screen später mit einer künstlich bzw. tricktechnisch erzeugten Darstellung einer weiteren Figur (z.B. eines Außerirdischen oder dergleichen) überlagert werden soll, so kann bereits während der Aufnahme des realen Schauspielers vor dem Blue Screen dem Kameramann die künstlich erzeugte Darstellung mittels der elektronischen Anzeige 37 in den optischen Sucher 29 eingeblendet werden. Der Kameramann kann somit die reale Aufnahme und die zusätzlich eingeblendete Darstellung des tricktechnischen Motivs gleichzeitig beobachten und die Kameraführung entsprechend beeinflussen, so dass gewährleistet ist, dass das endgültige Überlagern der realen und der künstlichen Szene in der Nachbearbeitung problemlos möglich ist.

Fig. 4 zeigt eine Abwandlung der Ausführungsform gemäß Fig. 3. Bei dieser ist eine Auswerte- und Steuereinrichtung 49 eingangsseitig mit einer dem Aufnahmesensor 27 nachgeschalteten Signalverarbeitungseinrichtung 41 verbunden. Ausgangsseitig ist die Auswerte- und Steuereinrichtung 49 an eine Bildspeichereinrichtung 45 angeschlossen, die mit der elektronischen Anzeige 37 verbunden ist.

Die Auswerte- und Steuereinrichtung 49 ist dergestalt konfiguriert, dass sie den Zeitpunkt der Wiedergabe einer in der Bildspeichereinrichtung 45 gespeicherten Laufbildsequenz an der elektronischen Anzeige 37 in Abhängigkeit vom Kameralauf steuert. In einem einfachen Fall wird die Laufbildsequenz wiedergegeben, sobald die Auswerte- und Steuereinrichtung 49 den Beginn des Kameralaufs bzw. einer Aufzeichnung mittels des Aufnahmesensors 27 detektiert. Die Auswerte- und Steuereinrichtung 49 kann auch dergestalt konfiguriert sein, dass sie das aktuelle Empfangssignal des Aufnahmesensors 27 hinsichtlich einer Objektbewegung innerhalb des Aufnahmebilds auswertet und in Abhängigkeit hiervon die Wiedergabefrequenz steuert, mit der in der Bildspeichereinrichtung 45 gespeicherte Laufbilddaten oder Stillbilddaten an der elektronischen Anzeige 37 wiedergegeben werden.

In der Bildspeichereinrichtung 45 kann, wie im Zusammenhang mit Fig. 3 erläutert, beispielsweise eine früher aufgezeichnete Laufbildsequenz abgespeichert sein, die als Referenz für die Kameraführung dient, oder die in der Bildspeichereinrichtung 45 gespeicherten Bilddaten entsprechen virtuellen Bildelementen, die in der Nachbearbeitung der Aufnahme eingefügt werden sollen. Die Auswerte- und Steuereinrichtung 49 vermag, das Abspielen dieser gespeicherten Bilddaten (Start- und Endpunkt, Laufgeschwindigkeit) in Abhängigkeit vom Kameralauf und/oder von dem Empfangssignal des Aufnahmesensors 27 zu steuern, um eine Synchronisierung des gespeicherten Geschehens mit der realen Aufnahme zu gewährleisten.

Auch bei der Ausführungsform gemäß Fig. 4 können die über die elektronische Anzeige 37 einzuspielenden Bilddaten alternativ von einer externen Speichereinrichtung stammen. In diesem Fall wird das Zusatzbild über einen Signaleingang 39 der Kamera zugeführt, wobei die Bildspeichereinrichtung 45 als Datenpuffer dienen kann.

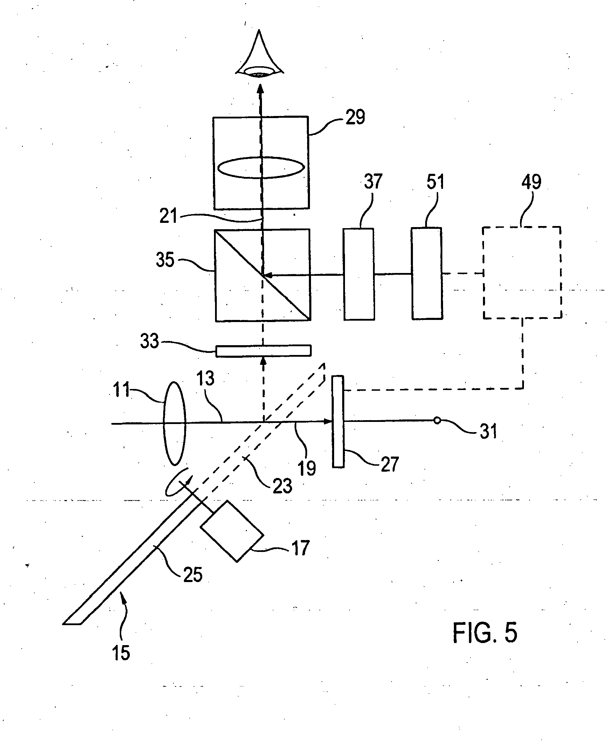

Fig. 5 zeigt eine Ausführungsform, bei der die Anzeige 37 eingangsseitig mit einem Bildgenerator 51 verbunden ist, der als ein Zusatzbild, das an der Anzeige 37 wiedergegeben werden soll, zum Beispiel Bildbereichkennzeichnungen, Bildformatmarkierungen, sonstige graphische Informationen oder alphanumerische Informationen erzeugt.

Beispielsweise kann mittels des Bildgenerators 51, der Anzeige 37 und des Bildmischers 35 dem auf die Mattscheibe 33 abgebildeten Aufnahmebild ein Rahmen überlagert werden, der je nach Bestimmung der Aufnahme (Kino oder Fernsehen) den Bildausschnitt des zugeordneten Bildformats markiert. Somit ist eine dauerhafte Markierung der Mattscheibe 33 oder ein Auswechseln unterschiedlich markierter Mattscheiben 33 nicht erforderlich. Bei der vom Bildgenerator 51 erzeugten Bildinformation kann es sich beispielsweise auch um eine alphanumerische Identifizierung der eingestellten Blende oder des eingestellten Tiefenschärfebereichs handeln.

Optional ist der Bildgenerator 51 eingangsseitig mit einer Auswerte- und Steuereinrichtung 49 verbunden, die eingangsseitig wiederum mit dem Aufnahmesensor 27 oder einer zugeordneten Signalverarbeitungseinrichtung verbunden ist. Die Auswerte- und Steuereinrichtung 49 wertet das Empfangssignal des Aufnahmesensors 27 hinsichtlich vorbestimmter Helligkeits- oder Schärfewerte aus und veranlasst den Bildgenerator zur Erzeugung von entsprechenden Helligkeitsbereichskennzeichnungen oder Schärfebereichskennzeichnungen, die an der elektronischen Anzeige 37 wiedergegeben werden. Somit wird dem an der Mattscheibe 33 beobachtbaren Aufnahmebild ein aus dem Sensorbild speziell aufbereitetes elektronisches Bild überlagert, um den Kameramann auf Bereiche mit einer bestimmten Helligkeit oder Schärfe (Modulationsfrequenz) hinzuweisen. Diese Bereiche können vom Bildgenerator 51 beispielsweise durch Schraffur gekennzeichnet werden.

Gemäß einer vorteilhaften Ausführungsform kann die Auswerte- und Steuereinrichtung 49 das Empfangssignal des Aufnahmesensors 27 für die einzelnen Bildpunkte des Aufnahmebilds beispielsweise mittels eines Komparators jeweils mit einem oberen Helligkeitsschwellenwert oder mit einem unteren Helligkeitsschwellenwert oder mit den beiden genannten Helligkeitsschwellenwerten vergleichen. In diesem Fall kann die Auswerteund Steuereinrichtung 49 wenigstens einen Helligkeitsbereich des Aufnahmebilds berechnen bzw. festlegen, innerhalb dessen für die Bildpunkte des Aufnahmebilds oder zumindest für einen überwiegenden Teil der Bildpunkte das jeweilige Empfangssignal den oberen Helligkeitsschwellenwert überschreitet oder den unteren Helligkeitsschwellenwert unterschreitet. Der Bildgenerator 51 erzeugt aufgrund der somit festgelegten Helligkeitsbereiche entsprechende Helligkeitsbereichskennzeichnungen, beispielsweise die bereits genannten Schraffuren. Diese Helligkeitsbereichskennzeichnungen werden also an der Anzeige 37 erzeugt und sind somit im optischen Sucher 29 als Warnhinweise überlagert zu dem Aufnahmebild sichtbar.

Die Erzeugung und Anzeige derartiger Helligkeitsbereichskennzeichnungen ist gerade bei Laufbildkameras mit einem optoelektronischen Aufnahmesensor von Bedeutung, da dieser generell eine geringere Helligkeitsdynamik besitzt als herkömmliches photochemisches Filmmaterial, wobei die Schwellenwerte für kritische obere und untere Helligkeitswerte sensorabhängig sind. Es ist daher vorteilhaft, wenn dem Kameramann Bildbereiche angezeigt werden können, in denen sich die aufzuzeichnenden Helligkeitswerte des Motivs als problematisch erweisen könnten, damit der Kameramann während der Kameraführung die erläuterten Warnhinweise bzw. Bildbereichskennzeichnungen berücksichtigen kann. Diese Funktion ist zum einen für einen Testlauf wichtig, um gegebenenfalls den Set ändern zu können (beispielsweise indem eine das Sonnenlicht reflektierende Kaffeekanne in den Schatten gerückt wird). Zum anderen ist diese Funktion für die eigentliche, endgültige Aufnahme wichtig, da der Kameramann somit eine Kontrollmöglichkeit hat, dass tatsächlich auch während der Aufnahme keine problematischen Helligkeiten aufgezeichnet werden. Falls sich dagegen erst nach der Aufnahme - nämlich bei der Sichtung der aufgezeichneten Filmszene - herausstellen würde, dass problematische Helligkeitswerte bzw. -bereiche aufgezeichnet wurden, wäre ein nachträgliches nochmaliges Aufzeichnen der Filmszene meist sehr aufwendig oder sogar unmöglich, da der Set nochmals nachgestellt werden müsste.

Wichtig ist, dass der Kameramann selbst - und nicht irgendeine andere Person - die erläuterten Helligkeitsbereichskennzeichnungen beobachten kann, und zwar in dem optischen Sucher. Der Kameramann kann also selbst die Kontrolle über die Helligkeitsaussteuerung des Aufnahmebilds behalten und gegebenenfalls die Kameraführung entsprechend beeinflussen, und er muss hierfür nicht auf die Verwendung des üblichen optischen Suchers 29 verzichten. Wichtig ist auch, dass dem Kameramann nicht lediglich ein einfaches Warnsignal übermittelt wird, sondern konkret angezeigt wird, in welchem Bildbereich der Fehler auftritt.

Von Bedeutung ist die Funktion des Anzeigens von Bildbereichskennzeichnungen und insbesondere von Helligkeitsbereichskennzeichnungen auch für das bereits im Zusammenhang mit Fig. 3 erwähnte Compositing, also für das Aufzeichnen von Motiven vor einem Blue Screen. Auch hier ist es nämlich wichtig, dass die Aufteilung des Aufnahmebilds in verschiedene Farb- oder Helligkeitsbereiche - also die Qualität des Segmentierens - beobachtet und kontrolliert werden kann. Beispielsweise kann es sich als problematisch erweisen, wenn eine Person mit einem grünen oder sogar blauen Kleidungsstück vor dem Blue Screen gefilmt wird. Durch den erläuterten Vergleich der Empfangssignale mit entsprechenden Schwellenwerten können dem Kameramann potentiell kritische Bildbereiche angezeigt werden.

Für den genannten Anwendungsfall des Compositing ist es von Vorteil, wenn die Empfangssignale des Aufnahmesensors 27 für die verschiedenen Bildpunkte jeweils hinsichtlich der Farben Rot, Grün und Blau mit unterschiedlichen Schwellenwerten verglichen werden, da beispielsweise die Empfangssignale der Farbe Blau kritischer sind als die Empfangssignale der Farbe Grün. Es muss auch nicht unbedingt für jede Farbe ein Vergleich mit einem Helligkeitsschwellenwert durchgeführt werden. Beispielsweise ist ein solcher Vergleich für die Farbe Rot hinsichtlich des Compositing nicht zwingend erforderlich.

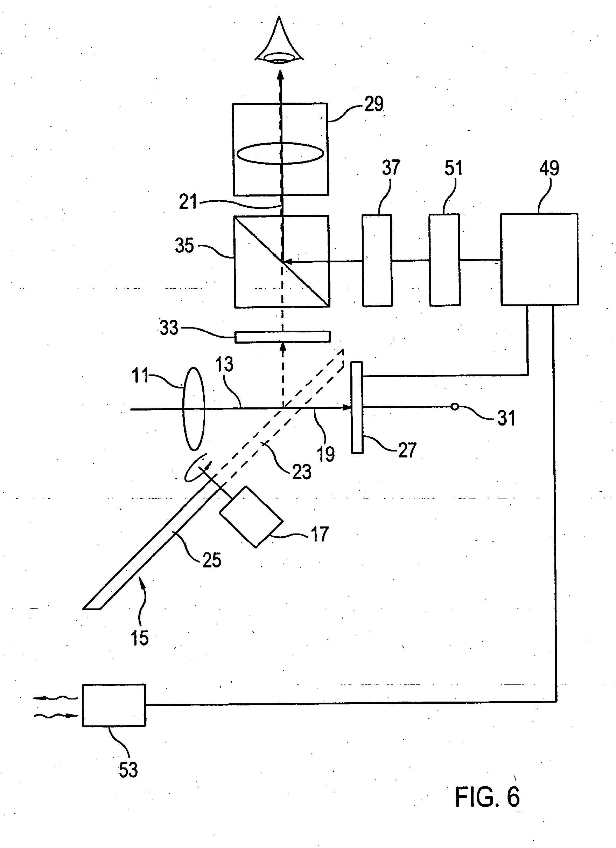

Fig. 6 zeigt eine Abwandlung der Ausführungsform gemäß Fig. 5, bei der zusätzlich eine Entfernungsmesseinrichtung 53 vorgesehen ist. Diese ist beispielsweise durch einen Infrarot-Taster oder einen Laser-Entfernungsmesser gebildet. Die Entfernungsmesseinrichtung 53 ist mit einer Auswerte- und Steuereinrichtung 49 verbunden, die eingangsseitig an den Aufnahmesensor 27 und ausgangsseitig an einen Bildgenerator 51 für die elektronische Anzeige 37 angeschlossen ist.

Die Entfernungsmesseinrichtung 53 vermag die Entfernung der Kamera zu einem Gegenstand innerhalb des aufgezeichneten Objektraums zu messen. Das entsprechende Messsignal kann von der Auswerte- und Steuereinrichtung 49 auf unterschiedliche Entfernungsbereiche des Objektraums und somit des vom Aufnahmesensor 27 aufgezeichneten Aufnahmebilds ausgewertet werden. In Abhängigkeit von dieser Auswertung veranlasst die Auswerte- und Steuereinrichtung 49 den Bildgenerator 51 zur Erzeugung entsprechender Entfernungsbereichskennzeichnungen, die von der elektronischen Anzeige 37 wiedergegeben und somit dem Mattscheibenbild überlagert werden.

Auf diese Weise wird dem Kameramann im Sucher 29 eine Art "Tiefenkarte" zur Verfügung gestellt, die - beispielsweise durch unterschiedliche Farbgebung (Falschfarbendarstellung), durch Schraffur oder durch Darstellung von verschiedenen Entfernungsbereichen mit unterschiedlicher Helligkeit - eine schnelle Identifizierung der Objektabstände und/oder der Schärfenebene ermöglicht. Hierdurch wird insbesondere das Einstellen eines gewünschten Tiefenschärfebereichs erleichtert. Selbstverständlich können mehrere Entfernungsmesseinrichtungen 53 vorgesehen sein, um die unterschiedlichen Entfernungsbereiche des Aufnahmebilds schnell und mit hoher Auflösung zu erfassen.

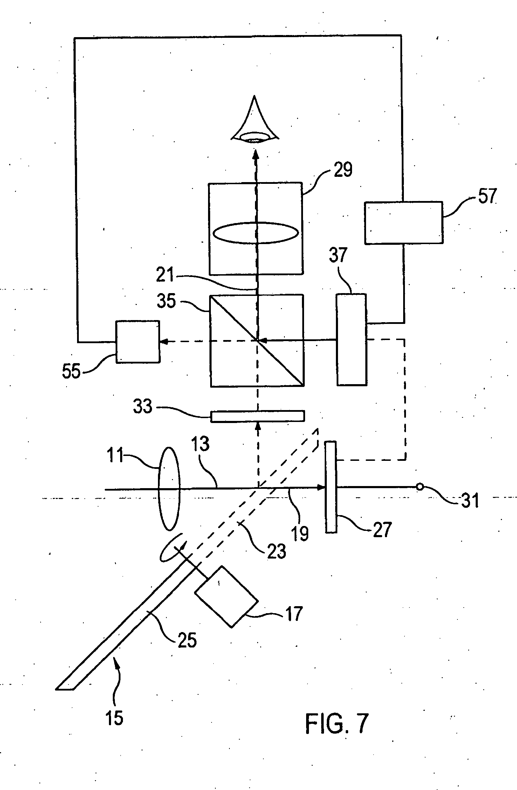

Fig. 7 zeigt eine Ausführungsform mit einem Photodetektor 55, der die Helligkeit des von der Empfangsoptik 11 auf die Mattscheibe 33 abgebildeten Aufnahmebilds misst. Der Photodetektor 55 ist mit einer Helligkeitsregelungseinrichtung 57 verbunden, die in Abhängigkeit von der gemessenen Helligkeit des Mattscheibenbilds die Helligkeit der Wiedergabe des Zusatzbilds an der elektronischen Anzeige 37 regelt. Die Helligkeitsregelungseinrichtung 57 kann beispielsweise dergestalt konfiguriert sein, dass das von der Empfangsoptik 11 abgebildete Aufnahmebild und das hiermit überlagerte Zusatzbild der elektronischen Anzeige 37 vom Betrachter mit gleicher Helligkeit oder mit einem gleich bleibenden Helligkeitsunterschied empfunden werden.

Anstelle der gezeigten Helligkeitsregelungseinrichtung 57 mit Photodetektor 55 kann auch eine einfache Helligkeitssteuereinrichtung vorgesehen sein, die mit der elektronischen Anzeige 37 verbunden ist, um die Helligkeit der Wiedergabe des Zusatzbilds auf einen gewünschten Wert einstellen zu können.

Für die Ausführungsform gemäß Fig. 1 ist es bevorzugt, wenn der optische Bildmischer 35 - beispielsweise in Form eines teildurchlässigen Spiegels - sowohl das von der Empfangsoptik 11 auf die Mattscheibe 33 abgebildete Aufnahmebild als auch das Zusatzbild der elektronischen Anzeige 37 gleichzeitig in Richtung des Suchers 29 zu lenken vermag.

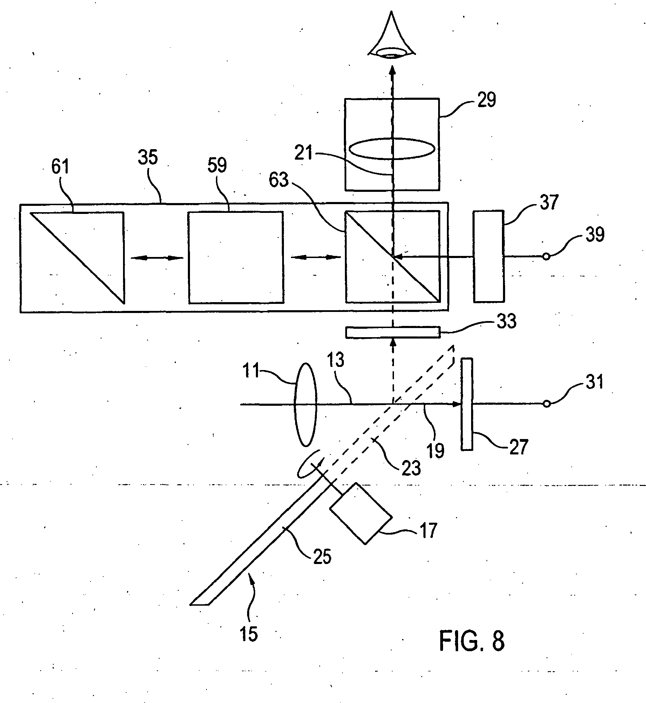

Fig. 8 zeigt eine hierzu alternative Ausführungsform, bei der der optische Bildmischer 35 wahlweise das von der Empfangsoptik 11 abgebildete Aufnahmebild, oder das Zusatzbild der elektrischen Anzeige 37, oder gleichzeitig das Aufnahmebild und das Zusatzbild in Richtung des Suchers 29 lenkt. Zu diesem Zweck kann der Bildmischer 35 einen volldurchlässigen Abschnitt 59, einen vollreflektierenden Abschnitt 61 und einen teilreflektierenden/teildurchlässigen Abschnitt 63 besitzen, die wahlweise in den Sucherstrahlengang 21 eingeführt werden. Beispielsweise können die drei Abschnitte 59, 61, 63 an einem Bildmischerkarussell angeordnet sein, durch dessen Drehung der gewünschte Abschnitt in den Sucherstrahlengang 21 gebracht wird.

Alternativ zu einem derartigen Karussell kann der Bildmischer 35 auch eine kontinuierliche Variation des Teilerverhältnisses gestatten, so dass für den Betrachter die relativen Anteile der beiden Vorlagen, also des an der Mattscheibe 33 wiedergegebenen Aufnahmebilds und des von der Anzeige 37 wiedergegebenen Zusatzbilds, gegeneinander verschoben werden können. Beispielsweise kann der Bildmischer 35 einen Flüssigkristallspiegel mit steuerbarer Durchlässigkeit aufweisen, so dass je nach Anordnung der Flüssigkristalle ein größerer Anteil des Aufnahmebilds oder ein größerer Anteil des Zusatzbilds in Richtung des Suchers 29 gelenkt wird.

Schließlich ist anzumerken, dass die im Zusammenhang mit den Fig. 1 bis 8 erläuterten Ausführungsformen beliebig miteinander kombiniert werden können, um den Bildmischer 35 und die Anzeige 37 noch vielseitiger einzusetzen.

### Bezugszeichenliste

- 11: Empfangsoptik
- 13: Empfangsstrahlengang
- 15: Spiegelblende
- 17: Antriebseinheit
- 19: Aufnahmestrahlengang
- 21: Sucherstrahlengang
- 23: Durchlassbereich
- 25: Ausblendbereich
- 27: Aufnahmesensor
- 29: Sucher
- 31: Signalausgang
- 33: Mattscheibe
- 35: optischer Bildmischer
- 37: elektronische Anzeige
- 39: Signaleingang
- 41: Signalverarbeitungseinrichtung
- 43: Steuereinrichtung
- 45: Bildspeichereinrichtung
- 47: externe Speichereinrichtung
- 49: Auswerte- und Steuereinrichtung
- 51: Bildgenerator
- 53: Entfernungsmesseinrichtung
- 55: Photodetektor
- 57: Helligkeitsregelungseinrichtung
- 59: volldurchlässiger Abschnitt
- 61: vollreflektierender Abschnitt
- 63: teilreflektierender/teildurchlässiger Abschnitt

## Patentansprüche

1. Elektronische Laufbildkamera,
mit einer Empfangsoptik (11) und einem Strahlenteiler (15), der den Empfangsstrahlengang (13) in einen zu einem optoelektronischen Aufnahmesensor (27) führenden Aufnahmestrahlengang (19) und einen zu einem optischen Sucher (29) führenden Sucherstrahlengang (21) aufteilt,
wobei die Kamera eine elektronische Anzeige (37) zur Wiedergabe eines Zusatzbilds aufweist, und
wobei im Sucherstrahlengang (21) ein optischer Bildmischer (35) angeordnet ist, durch den ein von der Empfangsoptik (11) abgebildetes Aufnahmebild und das von der elektronischen Anzeige (37) wiedergegebene Zusatzbild dergestalt in Richtung des Suchers (29) lenkbar sind, dass das Aufnahmebild und das Zusatzbild als ein einheitliches Bild im Sucher (29) beobachtbar sind,
**dadurch gekennzeichnet**,
dass die elektronische Anzeige (37) eingangsseitig dergestalt mit einer dem Aufnahmesensor (27) nachgeschalteten Bildspeichereinrichtung (45) verbunden ist, dass in der Bildspeichereinrichtung (45) gespeicherte Laufbilddaten des Aufnahmesensors (27) während einer neuen Aufnahme an der Anzeige (37) als Zusatzbild wiedergebbar sind, um dem Kameramann eine Referenz für die Kameraführung zu bieten.

2. Elektronische Laufbildkamera,
mit einer Empfangsoptik (11) und einem Strahlenteiler (15), der den Empfangsstrahlengang (13) in einen zu einem optoelektronischen Aufnahmesensor (27) führenden Aufnahmestrahlengang (19) und einen zu einem optischen Sucher (29) führenden Sucherstrahlengang (21) aufteilt,
wobei die Kamera eine elektronische Anzeige (37) zur Wiedergabe eines Zusatzbilds aufweist, und
wobei im Sucherstrahlengang (21) ein optischer Bildmischer (35) angeordnet ist, durch den ein von der Empfangsoptik (11) abgebildetes Aufnahmebild und das von der elektronischen Anzeige (37) wiedergegebene Zusatzbild dergestalt in Richtung des Suchers (29) lenkbar sind, dass das Aufnahmebild und das Zusatzbild als ein einheitliches Bild im Sucher (29) beobachtbar sind,
**dadurch gekennzeichnet**,
dass die elektronische Anzeige (37) einen Signaleingang (39) aufweist, an den eine externe Speichereinrichtung (47) anschließbar ist, wobei über den Signaleingang (39) Laufbilddaten einlesbar sind, die während einer Aufnahme an der Anzeige (37) als Zusatzbild wiedergebbar sind, um dem Kameramann eine Referenz für die Kameraführung zu bieten.

3. Kamera nach Anspruch 1 oder 2,
**dadurch gekennzeichnet**,
dass die elektronische Anzeige (37) zur Wiedergabe von Laufbildern oder Stillbildern ausgebildet ist, die im Wesentlichen zeitgleich mittels des Aufnahmesensors (27) aufgezeichnet werden oder die zu einem früheren Zeitpunkt mittels des Aufnahmesensors (27) aufgezeichnet worden sind,
und/oder
dass die elektronische Anzeige (37) eingangsseitig mit dem Aufnahmesensor (27) verbunden ist, insbesondere über eine Signalverarbeitungseinrichtung (41) und/oder eine Bildspeichereinrichtung (45), und/oder
dass die elektronische Anzeige (37) eingangsseitig dergestalt mit dem Aufnahmesensor (27) verbunden ist, dass an der Anzeige (37) das aktuelle Empfangssignal des Aufnahmesensors (27) als Zusatzbild wiedergebbar ist.

4. Kamera nach Anspruch 3,
**dadurch gekennzeichnet**,
dass die Kamera eine Steuereinrichtung (43) aufweist, durch die der Strahlenteiler (15), der Aufnahmesensor (27) und die elektronische Anzeige (37) derart ansteuerbar sind, dass im Sucher (29) das von der Empfangsoptik (11) abgebildete Aufnahmebild und das von der elektronischen Anzeige (37) wiedergegebene aktuelle Empfangssignal des Aufnahmesensors (27) im Wesentlichen alternierend beobachtbar sind,
und/oder
dass die Kamera eine Steuereinrichtung (43) aufweist, durch die der Strahlenteiler (15) und die elektronische Anzeige (37) derart ansteuerbar sind, dass während einer Sequenz von mehreren aufeinander folgenden Laufbildern die Empfangsoptik (11) das Aufnahmebild ausschließlich auf den Aufnahmesensor (27) abbildet und die Anzeige (37) durchgehend das aktuelle Empfangssignal des Aufnahmesensors (27) als Zusatzbild wiedergibt.

5. Kamera nach einem der vorhergehenden Ansprüche,
**dadurch gekennzeichnet**,
dass die Kamera eine Auswerte- und Steuereinrichtung (49) aufweist, die mit der elektronischen Anzeige (37) verbunden ist, wobei mittels der Steuer- und Auswerteeinrichtung (49) der Wiedergabezeitpunkt oder die Wiedergabefrequenz von gespeicherten oder eingelesenen Laufbilddaten oder Stillbilddaten an der elektronischen Anzeige (37) in Abhängigkeit vom Kameralauf steuerbar ist.

6. Kamera nach einem der vorhergehenden Ansprüche,
**dadurch gekennzeichnet**,
dass die elektronische Anzeige (37) eingangsseitig mit einem Bildgenerator (51) verbunden ist, durch den Bildbereichskennzeichnungen, Bildformatmarkierungen oder alphanumerische Informationen zur Wiedergabe an der Anzeige (37) erzeugbar sind.

7. Kamera nach Anspruch 6,
**dadurch gekennzeichnet**,
dass der Bildgenerator (51) eingangsseitig mit einer Auswerte- und Steuereinrichtung (49) verbunden ist, die eingangsseitig mit dem Aufnahmesensor (27) verbunden ist,
wobei mittels der Auswerte- und Steuereinrichtung (49) das Empfangssignal des Aufnahmesensors (27) hinsichtlich vorbestimmter Helligkeits- oder Schärfewerte auswertbar ist und
wobei mittels des Bildgenerators (51) entsprechende Helligkeitsbereichskennzeichnungen oder Schärfebereichskennzeichnungen zur Wiedergabe an der Anzeige (37) erzeugbar sind.

8. Kamera nach Anspruch 7,
**dadurch gekennzeichnet**,
dass die Auswerte- und Steuereinrichtung (49) einen Komparator aufweist, durch den das Empfangssignal des Aufnahmesensors (27) mit einem oberen Helligkeitsschwellenwert und/oder mit einem unteren Helligkeitsschwellenwert vergleichbar ist.

9. Kamera nach Anspruch 8,
**dadurch gekennzeichnet**,
dass mittels der Auswerte- und Steuereinrichtung (49) wenigstens ein Helligkeitsbereich des Aufnahmebilds festlegbar ist, in dem zumindest für einen überwiegenden Teil der Bildpunkte des Aufnahmebilds das Empfangssignal des Aufnahmesensors (27) den oberen Helligkeitsschwellenwert überschreitet oder den unteren Helligkeitsschwellenwert unterschreitet,
wobei mittels des Bildgenerators (51) Helligkeitsbereichskennzeichnungen zur Wiedergabe an der Anzeige (37) erzeugbar sind, die den von der Auswerte- und Steuereinrichtung (49) festgelegten Helligkeitsbereichen entsprechen.

10. Kamera nach einem der Ansprüche 8 oder 9,
**dadurch gekennzeichnet**,
dass das Empfangssignal des Aufnahmesensors (27) für die Farben Rot, Grün und Blau mit unterschiedlichen Schwellenwerten vergleichbar ist.

11. Kamera nach einem der Ansprüche 6 bis 10,
**dadurch gekennzeichnet**,
dass die Kamera wenigstens eine Entfernungsmesseinrichtung (53) aufweist, durch die eine Entfernung der Kamera zu einem Gegenstand im Objektraum messbar ist, und
dass der Bildgenerator (51) eingangsseitig mit einer Auswerte- und Steuereinrichtung (49) verbunden ist, die eingangsseitig mit der Entfernungsmesseinrichtung (53) verbunden ist,
wobei mittels der Auswerte- und Steuereinrichtung (49) das Messsignal der Entfernungsmesseinrichtung (53) hinsichtlich unterschiedlicher Entfernungsbereiche des Objektraums auswertbar ist und
wobei mittels des Bildgenerators (51) entsprechende Entfernungsbereichskennzeichnungen zur Wiedergabe an der Anzeige (37) erzeugbar sind.

12. Kamera nach einem der vorhergehenden Ansprüche,
**dadurch gekennzeichnet**,
dass die Kamera eine Helligkeitssteuereinrichtung aufweist, durch die die Helligkeit der Wiedergabe des Zusatzbilds an der elektronischen Anzeige (37) einstellbar ist,
und/oder
dass die Kamera einen Photodetektor (55) aufweist, durch den die Helligkeit des von der Empfangsoptik (11) im Sucher (29) abgebildeten Aufnahmebilds messbar ist, und die Kamera eine Helligkeitsregelungseinrichtung (57) aufweist, durch die die Helligkeit der Wiedergabe des Zusatzbilds an der elektronischen Anzeige (37) in Abhängigkeit von der gemessenen Helligkeit des Aufnahmebilds regelbar ist,
und/oder
dass die Kamera eine Justiereinrichtung aufweist, durch die die Wiedergabe des Zusatzbilds an der elektronischen Anzeige (37) relativ zu dem von der Empfangsoptik (11) abgebildeten Aufnahmebild justierbar ist.

13. Kamera nach einem der vorhergehenden Ansprüche,
**dadurch gekennzeichnet**,
dass die elektronische Anzeige (37) einen Flüssigkristallmonitor, einen TFT-Monitor oder einen Röhrenmonitor aufweist, und/oder
dass durch den optischen Bildmischer (35) das von der Empfangsoptik (11) abgebildete Aufnahmebild und das von der elektronischen Anzeige (37) wiedergegebene Zusatzbild gleichzeitig in Richtung des Suchers (29) lenkbar sind,
und/oder
dass der optische Bildmischer (35) einen teildurchlässigen Spiegel aufweist.

14. Kamera nach einem der vorhergehenden Ansprüche,
**dadurch gekennzeichnet**,
dass durch den optischen Bildmischer (35) wahlweise das von der Empfangsoptik (11) abgebildete Aufnahmebild, das von der elektronischen Anzeige (37) wiedergegebene Zusatzbild oder gleichzeitig das Aufnahmebild und das Zusatzbild in Richtung des Suchers (29) lenkbar sind,
wobei der optische Bildmischer (35) insbesondere einen volldurchlässigen Abschnitt (59), einen vollreflektierenden Abschnitt (61) und einen teilreflektierenden Abschnitt (63) aufweist, die wahlweise in den Sucherstrahlengang (21) bringbar sind.

15. Kamera nach einem der vorhergehenden Ansprüche,
**dadurch gekennzeichnet**,
dass mittels des Strahlenteilers (15) das Aufnahmebild alternierend in Richtung des Aufnahmesensors (27) und in Richtung des Suchers (29) lenkbar ist,
wobei der Strahlenteiler insbesondere eine rotierende Spiegelblende (15) aufweist.

16. Kamera nach einem der vorhergehenden Ansprüche,
**dadurch gekennzeichnet**,
dass der von der Empfangsoptik (11) im Sucher (29) abgebildete und dort beobachtbare Bildausschnitt des Aufnahmebilds größer ist als der vom Aufnahmesensor (27) tatsächlich aufgenommene Bildausschnitt des Aufnahmebilds,
und/oder
dass im Sucherstrahlengang (21) eine dem optischen Sucher (29) vorgeschaltete Mattscheibe (33) angeordnet ist, auf die die Empfangsoptik (11) das Aufnahmebild abbildet, wobei die elektronische Anzeige (37) und die Mattscheibe (33) insbesondere in derselben Objektebene des Suchers (29) angeordnet sind und/oder der optische Bildmischer (35) insbesondere zwischen dem Sucher (29) und der Mattscheibe (33) angeordnet ist.

17. Kamera nach einem der vorhergehenden Ansprüche,
**dadurch gekennzeichnet**,
dass die Kamera als eine digitalelektronische Laufbildkamera mit einer dem Aufnahmesensor (27) nachgeschalteten Digitalisierungseinrichtung (41) ausgebildet ist.

18. Verfahren zur Darstellung eines Aufnahmebilds und eines Zusatzbilds in einem optischen Sucher (29) einer elektronischen Laufbildkamera, wobei eine Empfangsoptik (11) das Aufnahmebild entlang eines Aufnahmestrahlengangs (19) auf einen Aufnahmesensor (27) abbildet und entlang eines Sucherstrahlengangs (21) in einem Sucher (29) zur Darstellung bringt, wobei eine elektronische Anzeige (37) das Zusatzbild wiedergibt, und wobei ein optischer Bildmischer (35) das von der Empfangsoptik (11) abgebildete Aufnahmebild und das von der elektronischen Anzeige (37) wiedergegebene Zusatzbild derart in Richtung des Suchers (29) lenkt, dass das Aufnahmebild und das Zusatzbild als ein einheitliches Bild im Sucher (29) beobachtbar sind,
**dadurch gekennzeichnet**,
dass die elektronische Anzeige (37) eingangsseitig mit einer dem Aufnahmesensor (27) nachgeschalteten Bildspeichereinrichtung (45) verbunden ist, wobei in der Bildspeichereinrichtung (45) gespeicherte Laufbilddaten des Aufnahmesensors (27) während einer neuen Aufnahme an der Anzeige (37) als Zusatzbild wiedergegeben werden, um dem Kameramann eine Referenz für die Kameraführung zu bieten.

19. Verfahren zur Darstellung eines Aufnahmebilds und eines Zusatzbilds in einem optischen Sucher (29) einer elektronischen Laufbildkamera, wobei eine Empfangsoptik (11) das Aufnahmebild entlang eines Aufnahmestrahlengangs (19) auf einen Aufnahmesensor (27)
abbildet und entlang eines Sucherstrahlengangs (21) in einem Sucher (29) zur Darstellung bringt, wobei eine elektronische Anzeige (37) das Zusatzbild wiedergibt, und wobei ein optischer Bildmischer (35) das von der Empfangsoptik (11) abgebildete Aufnahmebild und das von der elektronischen Anzeige (37) wiedergegebene Zusatzbild derart in Richtung des Suchers (29) lenkt, dass das Aufnahmebild und das Zusatzbild als ein einheitliches Bild im Sucher (29) beobachtbar sind,
**dadurch gekennzeichnet**,
dass der elektronischen Anzeige (37) von einer externen Speichereinrichtung (47) Laufbilddaten zugeführt werden, die während einer Aufnahme an der Anzeige (37) als Zusatzbild wiedergegeben werden, um dem Kameramann eine Referenz für die Kameraführung zu bieten.

20. Verfahren nach Anspruch 18 oder 19,
**dadurch gekennzeichnet**,
dass die elektronische Anzeige (37) eingangsseitig mit einem Bildgenerator (51) verbunden wird, durch den Bildbereichskennzeichnungen, Bildformatmarkierungen oder alphanumerische Informationen erzeugt werden, die an der Anzeige (37) wiedergegeben werden.

21. Verfahren nach Anspruch 20,
**dadurch gekennzeichnet**,
dass der Bildgenerator (51) eingangsseitig mit einer Auswerte- und Steuereinrichtung (49) verbunden wird, die eingangsseitig mit dem Aufnahme sensor (27) verbunden wird,
wobei die Auswerte- und Steuereinrichtung (49) das Empfangssignal des Aufnahmesensors (27) hinsichtlich vorbestimmter Helligkeits- oder Schärfewerte auswertet und
wobei der Bildgenerator (51) entsprechende Helligkeitsbereichskennzeichnungen oder Schärfebereichskennzeichnungen erzeugt, die an der Anzeige (37) wiedergegeben werden.

22. Verfahren nach Anspruch 21,
**dadurch gekennzeichnet**,
dass die Auswerte- und Steuereinrichtung (49) das Empfangssignal des Aufnahmesensors (27) mit einem oberen Helligkeitsschwellenwert und/oder mit einem unteren Helligkeitsschwellenwert vergleicht.

23. Verfahren nach Anspruch 22,
**dadurch gekennzeichnet**,
dass die Auswerte- und Steuereinrichtung (49) wenigstens einen Helligkeitsbereich des Aufnahmebilds festlegt, in dem zumindest für einen überwiegenden Teil der Bildpunkte des Aufnahmebilds das Empfangssignal des Aufnahmesensors (27) den oberen Helligkeitsschwellenwert überschreitet oder den unteren Helligkeitsschwellenwert unterschreitet,
wobei der Bildgenerator (51) Helligkeitsbereichskennzeichnungen erzeugt, die den von der Auswerte- und Steuereinrichtung (49) festgelegten Helligkeitsbereichen entsprechen und die an der Anzeige (37) wiedergegeben werden.

24. Verfahren nach einem der Ansprüche 22 oder 23,
**dadurch gekennzeichnet**,
dass das Empfangssignal des Aufnahmesensors (27) für die Farben Rot, Grün und Blau mit unterschiedlichen Schwellenwerten verglichen wird.

## Claims

1. An electronic motion picture camera,
having an optical receiving system (11) and a beam splitter (15) which splits the receiving beam path (13) into a taking beam path (19) leading to an optoelectronic taking sensor (27) and into a viewfinder beam path (21) leading to an optical viewfinder (29), wherein the camera has an electronic display (37) for the reproduction of an additional image, and
wherein an optical vision mixer (35) is arranged in the viewfinder beam path (21) by which a taken image imaged by the optical receiving system (11) and the additional image reproduced by the electronic display (37) can be directed in the direction of the viewfinder (29) such that the taken image and the additional image can be observed as a uniform image in the viewfinder (29), **characterized in that**
the electronic display (37) is connected to an image memory device (45) connected downstream of the taking sensor (27) at the input side such that motion picture data of the taking sensor (27) stored in the image memory device (45) can be reproduced as an additional image at the display (37) during a new take to offer the cameraman a reference for the camera work.

2. An electronic motion picture camera,
having an optical receiving system (11) and a beam splitter (15) which splits the receiving beam path (13) into a taking beam path (19) leading to an optoelectronic taking sensor (27) and into a viewfinder beam path (21) leading to an optical viewfinder (29), wherein the camera has an electronic display (37) for the reproduction of an additional image, and
wherein an optical vision mixer (35) is arranged in the viewfinder beam path (21) by which a taken image imaged by the optical receiving system (11) and the additional image reproduced by the electronic display (37) can be directed in the direction of the viewfinder (29) such that the taken image and the additional image can be observed as a uniform image in the viewfinder (29), **characterized in that**
the electronic display (37) has a signal input (39) to which an external memory device (47) can be connected, with motion picture data being able to be read in via the signal input (39) which can be reproduced as an additional image at the display (37) during a take to offer the cameraman a reference for the camera work.

3. A camera in accordance with claim 1 or claim 2, **characterized in that**
the electronic display (37) is made for the reproduction of motion pictures or still pictures which are recorded substantially at the same time by means of the taking sensor (27) or which were recorded by means of the taking sensor (27) at an earlier point in time;
and/or
**in that** the electronic display (37) is connected to the taking sensor (27) at the input side, in particular via a signal processing device (41) and/or via an image memory device (45);
and/or
**in that** the electronic display (37) is connected to the taking sensor (27) at the input side such that the current received signal of the taking sensor (27) can be reproduced as an additional image at the display (37).

4. A camera in accordance with claim 3,
**characterized in that**
the camera has a control device (43) by which the beam splitter (15), the taking sensor (27) and the electronic display (37) can be controlled such that the taken image imaged by the optical receiving system (11) and the current received signal of the taking sensor (27) reproduced by the electronic display (37) can substantially be observed alternately in the viewfinder (29);
and/ or
**in that** the camera has a control device (43) by which the beam splitter (15) and the electronic display (37) can be controlled such that the optical receiving system (11) only images the taken image on the taking sensor (27) during a sequence of a plurality of successive motion pictures and the display (37) continuously reproduces the current received signal of the taking sensor (27) as an additional image.

5. A camera in accordance with any one of the preceding claims,
**characterized in that**
the camera has an evaluation and control device (49) which is connected to the electronic display (37), with the reproduction time or the reproduction frequency of stored or read-in motion picture data or still picture data at the electronic display (37) being able to be controlled by means of the control and evaluation device (49) in dependence on the camera movement

6. A camera in accordance with any one of the preceding claims,
**characterized in that**
the electronic display (37) is connected to an image generator (51) at the input side by which image region marks, image format markings or alphanumeric information can be generated for reproduction at the display (37).

7. A camera in accordance with claim 6,
**characterized in that**
the image generator (51) is connected at the input side to an evaluation and control device (49) which is connected at the input side to the taking sensor (27),
wherein the received signal of the taking sensor (27) can be evaluated with respect to pre-determined brightness values or sharpness values by means of the evaluation and control device (49); and
wherein corresponding brightness range marks or sharpness range marks can be generated by means of the image generator (51) for reproduction at the display (37).

8. A camera in accordance with claim 7,
**characterized in that**
the evaluation and control device (49) has a comparator by which the received signal of the taking sensor (27) is comparable with an upper brightness threshold value and/or with a lower brightness threshold value.

9. A camera in accordance with claim 8,
**characterized in that**
at least one brightness range of the taken image can be fixed by means of the evaluation and control device (49) in which the received signal of the taking sensor (27) exceeds the upper brightness threshold value or does not reach the lower brightness threshold value at least for a predominant proportion of the picture elements of the taken image,
wherein brightness range marks can be generated by means of the image generator (51) for reproduction at the display (37) which correspond to the brightness ranges fixed by the evaluation and control device (49).

10. A camera in accordance with claim 8 or claim 9,
**characterized in that**
the received signal of the taking sensor (27) can be compared to different threshold values for the colors red, green and blue.

11. A camera in accordance with any one of the claims 6 to 10,
**characterized in that**
the camera has at least one range finder device (53) by which a distance of the camera to an article in the object space can be measured; and
**in that** the image generator (51) is connected at the input side to an evaluation and control device (49) which is connected at the input side to the range finder device (53),
wherein the measured signal of the range finder device (53) can be evaluated with respect to different distance ranges of the object space by means of the evaluation and control device (49); and wherein corresponding distance range marks can be generated by means of the image generator (51) for reproduction at the display (37).

12. A camera in accordance with any one of the preceding claims,
**characterized in that**
the camera has a brightness control device by which the brightness of the reproduction of the additional image at the electronic display (37) can be adjusted;
and/or
**in that** the camera has a photodetector (55) by which the brightness of the taken image imaged by the optical receiving system (11) in the viewfinder (29) can be measured and the camera has a brightness regulation device (57) by which the brightness of the reproduction of the additional image at the electronic display (37) can be regulated in dependence on the measured brightness of the taken image; and / or
**in that** the camera has an adjustment device by which the reproduction of the additional image at the electronic display (37) can be adjusted relative to the taken image imaged by the optical receiving system (11).

13. A camera in accordance with any one of the preceding claims,
**characterized in that**
the electronic display (37) has a liquid crystal monitor, a TFT monitor or a CRT monitor;
and/or
**in that** the taken image imaged by the optical receiving system (11) and the additional image reproduced by the electronic display (37) can be simultaneously directed in the direction of the viewfinder (29) by the optical vision mixer (35);
and/or
**in that** the optical vision mixer (35) has a partly transmitting mirror.

14. A camera in accordance with any one of the preceding claims,
**characterized in that**
the taken image imaged by the optical receiving system (11), the additional image reproduced by the electronic display (37) or the taken image and the additional image simultaneously can be selectively directed in the direction of the viewfinder (29) by the optical vision mixer (35),
wherein the optical vision mixer (35) in particular has a fully transmitting section (59), a fully reflective section (61) and a partly reflective section (63) which can be selectively introduced into the viewfinder beam path (21).

15. A camera in accordance with any one of the preceding claims,
**characterized in that**
the taken image can be alternately directed in the direction of the taking sensor (27) and in the direction of the viewfinder (29) by means of the beam splitter (15),
wherein the beam splitter in particular has a rotating mirror aperture (15).

16. A camera in accordance with any one of the preceding claims,
**characterized in that**
the image section of the taken image imaged by the optical receiving system (11) in the viewfinder (29) and observable there is larger than the image section of the taken image actually taken by the taking sensor (27);
and/or
**in that** a matt glass screen (33) connected upstream of the optical viewfinder (29) is arranged in the viewfinder beam path (21) and the optical receiving system (11) images the taken image on it, wherein the electronic display (37) and the matt glass screen (33) are in particular arranged in the same object plane of the viewfinder (29); and/or **in that** the optical vision mixer (35) is in particular arranged between the viewfinder (29) and the matt glass screen (33).

17. A camera in accordance with any one of the preceding claims,
**characterized in that**
the camera is made as a digital electronic motion picture camera with a digitizing device (41) connected downstream of the taking sensor (27).

18. A method for the presentation of a taken image and of an additional image in an optical viewfinder (29) of an electronic motion picture camera, wherein an optical receiving system (11) images the taken image along a taking beam bath (19) on a taking sensor (27) and presents it along a viewfinder beam path (21) in a viewfinder (29); wherein an electronic display (37) reproduces the additional image and wherein an optical vision mixer (35) directs the taken image imaged by the optical receiving system (11) and the additional image reproduced by the electronic display (37) in the direction of the viewfinder (29) such that the taken image and the additional image can be observed as a uniform image in the viewfinder (29),
**characterized in that**
the electronic display (37) is connected to an image memory device (45) connected downstream of the taking sensor (27) at the input side, wherein motion picture data of the taking sensor (27) stored in the image memory device (45) are reproduced as an additional image at the display (37) during a new take to offer the cameraman a reference for the camera work.

19. A method for the presentation of a taken image and of an additional image in an optical viewfinder (29) of an electronic motion picture camera, wherein an optical receiving system (11) images the taken image along a taking beam bath (19) on a taking sensor (27) and presents it along a viewfinder beam path (21) in a viewfinder (29); wherein an electronic display (37) reproduces the additional image; and wherein an optical vision mixer (35) directs the taken image imaged by the optical receiving system (11) and the additional image reproduced by the electronic display (37) in the direction of the viewfinder (29) such that the taken image and the additional image can be observed as a uniform image in the viewfinder (29),
**characterized in that**
motion picture data are supplied to the electronic display (37) from an external memory device (47) and are reproduced as an additional image at the display (37) during a take to offer the cameraman a reference for the camera work.

20. A method in accordance with claim 18 or claim 19,
**characterized in that**
the electronic display (37) is connected to an image generator (51) at the input side by which image region marks, image format markings or alphanumeric information are generated which are reproduced at the display (37).

21. A method in accordance with claim 20,
**characterized in that** the image generator (51) is connected at the input side to an evaluation and control device (49) which is connected at the input side to the taking sensor (27),
wherein the evaluation and control device (49) evaluates the received signal of the taking sensor (27) with respect to pre-determined brightness values or sharpness values; and
wherein the image generator (51) generates corresponding brightness range marks or sharpness range marks which are reproduced at the display (37).

22. A method in accordance with claim 21,
**characterized in that**
the evaluation and control device (49) compares the received signal of the taking sensor (27) with an upper brightness threshold value and/or with a lower brightness threshold value.

23. A method in accordance with claim 22,
**characterized in that** the evaluation and control device (49) fixes at least one brightness range of the taken image in which the received signal of the taking sensor (27) exceeds the upper brightness threshold value or does not reach the lower brightness threshold value at least for a predominant proportion of the picture elements of the taken image,
wherein the image generator (51) generates brightness range marks which correspond to the brightness ranges fixed by the evaluation and control device (49) and which are reproduced at the display (37).

24. A method in accordance with one of the claims 22 or 23,
**characterized in that**
the received signal of the taking sensor (27) is compared to different threshold values for the colors red, green and blue.

## Revendications

1. Caméra cinématographique électronique,
comprenant une optique de réception (11) et un diviseur de faisceau (15), qui divise la trajectoire du faisceau reçu (13) en une trajectoire de faisceau de prise de vue (19) qui mène à un capteur de prise de vue (27) et en une trajectoire de faisceau de viseur (21) qui mène à un viseur optique (29),
dans laquelle la caméra comprend un affichage électronique (37) pour la reproduction d'une image additionnelle, et
un mélangeur d'images optique (35) est agencé dans la trajectoire de faisceau de viseur (21), au moyen duquel une image prise par l'optique de réception (11) et l'image additionnelle reproduite par l'affichage électronique (37) peuvent être déviées en direction du viseur (29) de telle façon que l'image prise et l'image additionnelle peuvent être observées dans le viseur (29) comme une image unitaire,
**caractérisée en ce que**
l'affichage électronique (37) est relié du côté entrée à un dispositif à mémoire d'images (45) connecté à la suite du capteur de prise de vue (27) de telle façon que les données cinématographiques venant du capteur de prise de vue (27) et mémorisées dans le dispositif à mémoire d'images (45) peuvent être reproduites pendant une nouvelle prise de vue au niveau de l'affichage (37) à titre d'image additionnelle, afin d'offrir au cameraman une référence pour le guidage de la caméra.

2. Caméra cinématographique électronique,
comprenant une optique de réception (11) et un diviseur de faisceau (15), qui divise la trajectoire du faisceau reçu (13) en une trajectoire de faisceau de prise de vue (19) qui mène à un capteur de prise de vue (27) et en une trajectoire de faisceau de viseur (21) qui mène à un viseur optique (29),
dans laquelle la caméra comprend un affichage électronique (37) pour la reproduction d'une image additionnelle, et
un mélangeur d'images optiques (35) est agencé dans la trajectoire de faisceau de viseur (21), au moyen duquel une image prise par l'optique de réception (11) et l'image additionnelle reproduite par l'affichage électronique (37) peuvent être déviées en direction du viseur (29) de telle manière que l'image prise et l'image additionnelle peuvent être observées dans le viseur (29) comme une image unitaire,
**caractérisée en ce que**
l'affichage électronique (37) comprend une entrée de signal (39) à laquelle peut être branché un dispositif à mémoire externe (47), de sorte que des données d'images cinématographiques peuvent être lues via l'entrée de signal (39), lesquelles peuvent être reproduites pendant une prise de vue à titre d'image additionnelle au niveau de l'affichage (37), afin d'offrir au cameraman une référence pour le guidage de la caméra.

3. Caméra selon la revendication 1 ou 2,
**caractérisée en ce que** l'affichage électronique (37) est réalisé pour la reproduction d'images cinématographiques ou d'images fixes, qui sont prises sensiblement simultanément au moyen du capteur de prise de vue (27), ou qui ont été prises à un instant antérieur au moyen du capteur de prise de vue (27),
et/ou
**en ce que** l'affichage électronique (37) est relié du côté entrée au capteur de prise de vue (27), en particulier via un dispositif de traitement de signal (41) et/ou un dispositif à mémoire d'image (45), et/ou
**en ce que** l'affichage électronique (37) est relié du côté entrée au capteur de prise de vue (27) de telle façon que le signal reçu actuel du capteur de prise de vue (27) peut être reproduit à titre d'image additionnelle sur l'affichage (37).

4. Caméra selon la revendication 3,
**caractérisée en ce que**
la caméra comprend un dispositif de commande (43) au moyen duquel le diviseur de faisceau (15), le capteur de prise de vue (27) et l'affichage électronique (37) peuvent être pilotés de telle façon que l'image prise par l'optique de réception (11) et le signal de réception actuel provenant du capteur de prise de vue (27) et reproduit par l'affichage électronique (37) peuvent être observés sensiblement en alternance dans le viseur (29),
et/ou
**en ce que** la caméra comprend un dispositif de commande (43) au moyen duquel le diviseur de faisceau (15) et l'affichage électronique (37) peuvent être pilotés de telle façon que, pendant une séquence de plusieurs images cinématographiques mutuellement successives, l'image prise se forme exclusivement sur le capteur de prise de vue (27), et l'affichage (37) reproduit en permanence le signal reçu actuel du capteur de prise de vue (27) à titre d'image additionnelle.

5. Caméra selon l'une des revendications précédentes,
**caractérisée en ce que** la caméra comprend un dispositif d'évaluation et de commande (49) qui est relié à l'affichage électronique (37), de sorte que l'instant de reproduction ou la fréquence de reproduction de données d'images cinématographiques ou de données d'images fixes mémorisées ou lues peut être pilotée au moyen du dispositif de commande et d'évaluation (49) en fonction du guidage de la caméra.

6. Caméra selon l'une des revendications précédentes,
**caractérisée en ce que** l'affichage électronique est relié du côté entrée à un générateur d'images (51) au moyen duquel des marques caractéristiques de zones d'image, des marques de format d'image ou des informations alphanumériques peuvent être engendrées pour leur reproduction sur l'affichage (37).

7. Caméra selon la revendication 6,
**caractérisée en ce que** le générateur d'images (51) est relié du côté entrée à un dispositif d'évaluation et de commande (49), lequel est relié du côté entrée au capteur de prise de vue (27),
de sorte que le signal de réception du capteur de prise de vue (27) peut être évalué au moyen du dispositif d'évaluation et de commande (49) vis-à-vis de valeurs de luminosité ou de netteté prédéterminées, et dans laquelle des marques caractéristiques de zones de luminosité ou des marques caractéristiques de zones de netteté correspondantes sont susceptibles d'être engendrées au moyen du générateur d'images (51) pour leur reproduction sur l'affichage (37).

8. Caméra selon la revendication 7,
**caractérisée en ce que** le dispositif d'évaluation et de commande (49) comprend un comparateur au moyen duquel le signal de réception du capteur de prise de vue (27) peut être comparé à une valeur seuil de luminosité supérieure et/ou à une valeur seuil de luminosité inférieure.

9. Caméra selon la revendication 8,
**caractérisée en ce qu'**au moins une zone de luminosité de l'image prise peut être déterminée, au moyen du dispositif d'évaluation et de commande (49), dans laquelle le signal de réception du capteur de prise de vue (27) dépasse la valeur seuil de luminosité supérieure ou passe au-dessous de la valeur seuil de luminosité inférieure, au moins pour une majeure partie des points d'image de l'image prise,
dans laquelle des marques caractéristiques de zones de luminosité peuvent être engendrées au moyen du générateur d'images (51) pour leur reproduction sur l'affichage (37) et qui correspondent aux zones de luminosité déterminées par le dispositif d'évaluation et de commande (49).

10. Caméra selon l'une des revendications 8 ou 9,
**caractérisée en ce que** le signal de réception du capteur de prise de vue (27) peut être comparé à des valeurs seuil différentes pour les couleurs rouge, vert et bleu.

11. Caméra selon l'une des revendications 6 à 10,
**caractérisée en ce que** la caméra comprend au moins un dispositif de mesure d'éloignement (53) au moyen duquel un éloignement de la caméra par rapport à un objet dans l'espace objet peut être mesuré, et **en ce que** le générateur d'images (51) est relié du côté entrée à un dispositif d'évaluation et de commande (49), qui est relié du côté entrée au dispositif de mesure d'éloignement (53),
de sorte que le signal de mesure du dispositif de mesure d'éloignement (53) est susceptible d'être évalué au moyen du dispositif d'évaluation et de commande (49) pour ce qui concerne diverses zones d'éloignement dans l'espace objet ; et
dans laquelle des marques caractéristiques de zones d'éloignement correspondantes sont susceptibles d'être engendrées au moyen du générateur d'images (51) pour la reproduction sur l'affichage (37).

12. Caméra selon l'une des revendications précédentes,
**caractérisée en ce que**
la caméra comprend un dispositif de commande de luminosité au moyen duquel la luminosité de la reproduction de l'image additionnelle sur l'affichage électronique (37) peut être réglée,
et/ou
**en ce que** la caméra comprend un photodétecteur (55) au moyen duquel la luminosité de l'image prise par l'optique de réception (11) et reproduite dans le viseur (29) peut être mesurée, et la caméra comprend un dispositif de réglage de luminosité (57) au moyen duquel la luminosité de la reproduction de l'image additionnelle sur l'affichage électronique (37) peut être régulée en fonction de la luminosité mesurée de l'image prise,
et/ou
**en ce que** la caméra comprend un dispositif d'ajustement moyen duquel la reproduction de l'image additionnelle sur l'affichage électronique (37) peut être ajustée par rapport à l'image prise affichée sur l'optique de réception (11).

13. Caméra selon l'une des revendications précédentes,
**caractérisée en ce que**
l'affichage électronique (37) comprend un moniteur à cristaux liquides, un moniteur à TFT ou un moniteur à tube à rayons cathodiques,
et/ou
**en ce que** l'image prise par l'optique de réception (11) et l'image additionnelle reproduite par l'affichage électronique (37) peuvent être déviées par le mélangeur d'image optique (35) simultanément en direction du viseur (29),
et/ou
**en ce que** le mélangeur d'image optique (35) comprend un miroir semi-transparent.

14. Caméra selon l'une des revendications précédentes,
**caractérisée en ce que** soit l'image prise par l'optique de réception (11), soit l'image additionnelle reproduite par l'affichage électronique (37), soit encore simultanément l'image prise et l'image additionnelle peuvent être sélectivement déviées par le mélangeur d'image optique (35) en direction du viseur (29),
dans laquelle le mélangeur d'image optique (35) comprend en particulier une portion entièrement transparente (59), une portion entièrement réfléchissante (61), et une portion partiellement réfléchissante (63), qui peuvent être amenées sélectivement dans la trajectoire de faisceau de viseur (21).

15. Caméra selon l'une des revendications précédentes,
**caractérisée en ce que** l'image prise peut être déviée au moyen du diviseur de faisceau (15) en alternance en direction du capteur de prise de vue (27) et en direction du viseur (29),
dans laquelle le diviseur de faisceau comprend en particulier un cache à miroir (15) en rotation.

16. Caméra selon l'une des revendications précédentes,
**caractérisée en ce que** la portion d'image, dans l'image prise venant de l'optique de réception (11), reproduite dans le viseur (29) et observée dans celui-ci est plus grande que la portion d'image dans l'image prise effectivement prise par le capteur de prise de vue (27),
et/ou
**en ce qu'**une vitre mate (33) est agencée avant le viseur optique (29) dans la trajectoire de faisceau de viseur, vitre sur laquelle l'optique de réception (11) reproduit l'image prise, et l'affichage électronique (37) et la vitre mate (33) sont agencés en particulier dans le même plan objet du viseur (29), et/ou le mélangeur d'image optique (35) est agencé en particulier entre le viseur (29) et la vitre mate (33).

17. Caméra selon l'une des revendications précédentes,
**caractérisée en ce que** la caméra est réalisée sous forme de caméra cinématographique électronique numérique avec un dispositif de numérisation (41) branché à la suite du capteur de prise de vue (27).

18. Procédé pour la représentation d'une image prise et d'une image additionnelle dans un viseur optique (29) d'une caméra cinématographique électronique, dans lequel une optique de réception (11) forme l'image prise sur un capteur de prise de vue (27) le long d'une trajectoire de faisceau de prise de vue, et amène une trajectoire de faisceau de viseur (21) pour sa représentation dans un viseur (29), dans lequel un affichage électronique (37) reproduit l'image additionnelle, et dans lequel un mélangeur d'image optique (35) dévie l'image prise par l'optique de réception (11) et l'image additionnelle reproduite par l'affichage électronique (37) en direction du viseur (29) de telle façon que l'image prise et l'image additionnelle peuvent être observées dans le viseur (29) comme une image unitaire,
**caractérisé en ce que**
l'affichage électronique (37) est relié du côté entrée à un dispositif à mémoire d'images (45) branché à la suite du capteur de prise de vue (27), et dans lequel des données d'images cinématographiques venant du capteur de prise de vue (27) et mémorisées dans le dispositif à mémoire d'image (45) sont reproduites pendant une nouvelle prise de vue sous forme d'image additionnelle sur l'affichage (37), pour offrir au cameraman une référence pour le guidage de la caméra.

19. Procédé pour la représentation d'une image prise et d'une image additionnelle dans un viseur optique (29) d'une caméra cinématographique électronique, dans lequel une optique de réception (11) forme l'image prise sur un capteur de prise de vue (27) le long d'une trajectoire de faisceau de prise de vue, et amène une trajectoire de faisceau de viseur (21) pour sa représentation dans un viseur (29), dans lequel un affichage électronique (37) reproduit l'image additionnelle, et dans lequel un mélangeur d'image optique (35) dévie l'image prise par l'optique de réception (11) et l'image additionnelle reproduite par l'affichage électronique (37) en direction du viseur (29) de telle façon que l'image prise et l'image additionnelle peuvent être observées dans le viseur (29) comme une image unitaire,
**caractérisé en ce que**
des données d'images cinématographiques provenant d'un dispositif à mémoire externe (47) sont amenées à l'affichage électronique (37) et sont reproduites pendant une prise de vue sous forme d'image additionnelle sur l'affichage (37), pour offrir au cameraman une référence pour le guidage de la caméra.

20. Procédé selon la revendication 18 ou 19,
**caractérisé en ce que** l'affichage électronique (37) est relié du côté entrée à un générateur d'images (51) au moyen duquel des marques caractéristiques de zones d'images, des marques de format d'image ou des informations alphanumériques sont engendrées pour être reproduites sur l'affichage (37).

21. Procédé selon la revendication 20,
**caractérisé en ce que**
le générateur d'images (51) est relié du côté entrée un dispositif d'évaluation et de commande (40), lequel est relié du côté entrée au capteur de prise de vue (27),
dans lequel le dispositif d'évaluation et de commande (49) évalue le signal de réception du capteur de prise de vue (27) vis-à-vis de valeurs de luminosité ou de valeurs de netteté prédéterminées, et
dans lequel le générateur d'image (51) engendre des marques caractéristiques de zones de luminosité ou des marques caractéristiques de zones de netteté correspondantes, qui sont reproduites sur l'affichage (37).

22. Procédé selon la revendication 21,
**caractérisé en ce que** le dispositif d'évaluation et de commande (49) compare le signal de réception du capteur de prise de vue (27) avec une valeur seuil de luminosité supérieure et/ou avec une valeur seuil de luminosité inférieure.

23. Procédé selon la revendication 22,
**caractérisé en ce que** le dispositif d'évaluation et de commande (49) détermine au moins une zone de luminosité de l'image prise dans laquelle le signal de réception venant du capteur de prise de vue (27) dépasse la valeur seuil de luminosité supérieure ou passe au-dessous de la valeur seuil de luminosité inférieure, au moins pour une majeure partie des points d'image dans l'image prise,
dans lequel le générateur d'images (51) engendre des marques caractéristiques de zones de luminosité qui correspondent aux zones de luminosité déterminées par le dispositif d'évaluation et de commande (49) et qui sont reproduites sur l'affichage (37).

24. Procédé selon l'une des revendications 22 ou 23,
**caractérisé en ce que** le signal de réception du capteur de prise de vue (27) est comparé à différentes valeurs seuil pour les couleurs rouge, vert et bleu.
